# EUROPÄISCHE PATENTSCHRIFT

(11) **EP 0 442 591 B1**
(45) Veröffentlichungstag und Bekanntmachung des Hinweises auf die Patenterteilung: **22.06.1994**
(21) Anmeldenummer: 91250033.7
(22) Anmeldetag: 07.02.1991
(51) Int. Cl.: H02B 1/21

(54) **Mehrfeldrige Schaltanlage mit einer Sammelschienenanordnung**
Multifield switchgear with a bus bar arrangement
Installation de commutation multichamp avec une disposition de barres omnibus

(30) Priorität: 14.02.1990 DE 4005069
(43) Veröffentlichungstag der Anmeldung: 21.08.1991
(73) Patentinhaber: SIEMENS AKTIENGESELLSCHAFT, 80333 München (DE)
(72) Erfinder: Braun, Bodo, W-6050 Offenbach (DE); Bruszies, Christian, W-7302 Ostfildern 2 (DE); Feuerbach, Manfred, W-6000 Frankfurt 60 (DE); Festerling, Walter, W-4708 Kamen (DE); Genzel, Rolf-Günter, W-6129 Lützelbach (DE); Lobnig, Josef, W-8522 Herzogenaurach (DE); Raddatz, Jürgen, W-6000 Frankfurt 60 (DE)

(56) Entgegenhaltungen:
- EP-A- 0 311 574
- DE-A- 2 717 134
- DE-A- 3 243 079
- US-A- 2 445 463

## Beschreibung

Die Erfindung betrifft eine elektrische Schaltanlage mit mehreren zusammengesetzten Feldern und sich über mehrere Felder erstreckenden Sammelschienen, die innerhalb der Gesamtabmessungen der Schaltanlage verlaufend angeordnet und mittels isolierender Sammelschienenträger gehalten sind.

Schaltanlagen dieser Art sind sowohl mit obenliegend angeordneten Sammelschienen als auch mit rückseitig angeordneten Sammelschienen bekannt geworden. Beispielsweise ist in der Firmendruckschrift Siemens "Niederspannungs-Schaltanlage 8PU.011" (Bestell-Nr. A19100-E74-A91-Kennzeichen 174 224 PA 3865) eine Bauweise beschrieben, bei welcher der obere Bereich jedes Feldes der Schaltanlage gegenüber dem Einbauraum der Geräte durch eine Zwischenwand abgetrennt und zur Aufnahme von Sammelschienen vorgesehen ist. Isolierende Halter umgreifen die Sammelschienen vollständig und legen sie in den Richtungen quer zur Längserstreckung fest.

Eine andere Bauweise einer Schaltanlage etwa gemäß der DE-A-32 43 079 weist einen Sammelschienenraum auf, der sich an der Rückseite jedes Feldes über die gesamte Höhe des Feldes erstreckt. Ferner ist es bekannt, einen Sammelschienenraum vorzusehen, der sich an der Rückseite der Schaltfelder befindet und sich nur über einen Teil der Höhe des Feldes erstreckt (Firmendruckschrift Siemens "Niederspannungs-Schaltanlagen 8PG" Bestell-Nr. E22V(1877 - Kennzeichen 122 051 Ps 4735).

Sowohl mit Rücksicht auf die Betriebssicherheit als auch zur Verringerung der Anzahl von Bearbeitungs- und Montagevorgängen ist es erwünscht, die Sammelschienen in möglichst großer Länge zusammenhängend für eine mehrfeldrige Schaltanlage zu montieren.

Hierbei wird ein sog. Durchschiebeverfahren angewandt, bei dem Sammelschienen geeigneter Länge seitlich in den Sammelschienenraum eingeführt werden. Dieser Vorgang erfordert in der Montagewerkstatt einen freien Raum, welcher der Länge der Sammelschienen entspricht. Somit muß in der Werkstatt die doppelte Breite der in der Montage befindlichen Schaltanlage freigehalten werden. Um diesen Vorgang zu erleichtern, ist es bereits bekannt, kammartige Sammelschienenhalter an aufeinanderfolgenden Seitenwänden einer Schaltanlage mit entgegengesetzter Richtung der Ausnehmungen derart anzubringen, daß nach dem Durchstecken einer Sammelschiene diese in die Ausnehmungen eingelegt werden kann (DE-B-1 194 027).

Der Erfindung liegt die Aufgabe zugrunde, die Montage von Sammelschienen bei mehrfeldrigen Schaltanlagen zu vereinfachen und insbesondere den Raumbedarf in der Fertigungswerkstatt zu verringern.

Gemäß der Erfindung wird diese Aufgabe dadurch gelöst, daß durch örtliche zurückgesetztes bzw. eingezogenen Profil der tragenden Elemente benachbarter Felder ein auf ganzer Länge zugänglicher Sammelschienenraum gebildet ist und daß die Sammelschienenträger kammartig mit Ausnehmungen zur Aufnahme des vollen Profils der Sammelschienen ausgebildet sind. Diese Gestaltung macht das bisher gebräuchliche Durchschiebeverfahren und den hiermit verbundenen Raumbedarf entbehrlich. Vielmehr lassen sich die Sammelschienen direkt in die zugehörigen Halter einlegen. Obwohl die Sammelschienenträger lediglich mit Ausschnitten entsprechend dem Profil der Sammelschienen versehen sind, liegen die Sammelschienen ausreichend fest, da stets eine Verbindung mit weiterführenden Stromschienen hergestellt wird, und damit bei fertiggestellter Schaltanlage eine umfassende Versteifung und Befestigung erzielt wird.

Wird der Sammelschienenraum an der Rückseite der Schaltanlage vorgesehen, so empfiehlt es sich, die Breite der Ausnehmungen der Sammelschienenträger der größeren Abmessung des Profils der Sammelschienen entsprechend zu bemessen und die den unterschiedlichen Phasen zugeordneten Sammelschienen übereinander anzuordnen. Hierdurch wird nicht nur die Tiefe des Sammelschienenraumes verringert und das Einlegen der Sammelschienen in die Sammelschienenträger erleichtert, sondern es werden auch die Käfte verringert, welche die in den Sammelschienen fließenden Ströme auf die Sammelschienen ausüben.

Eine weitere Vereinfachung der Montage der Sammelschienen ist dadurch zu erzielen, daß die Sammelschienenhalter hinterschnittene Vorsprünge aufweisen und daß Tragelemente zum Eingreifen der Vorsprünge der Sammelschienenträger angeordnet sind.

Ferner können bei rückseitiger Anordnung des Sammelschienenraumes die Ausnehmungen der Sammelschienenträger winklig zur Rückwand der Schaltanlage angeordnet sein. Diese Maßnahme vermag die sichere Lage der Sammelschienen bis zu ihrer Verbindung mit weiteren Stromschienen zu verbessern.

Die Erfindung sieht ferner eine Vorrichtung zur Montage von Sammelschienen an einer Schaltanlage mit rückseitig angeordnetem Sammelschienenraum in der Ausführung vor, daß die Vorrichtung wenigstens zwei mit Ausschnitten entsprechend den Ausschnitten der Sammelschienenträger versehene Halter aufweist, und daß Klemmvorrichtungen zur vorübergehenden Befestigung der Sammelschienen in den Haltern vorgesehen sind. Auf diese Weise können Sammelschienen in einer bequemen Arbeitsstellung an den Haltern montiert werden. Nach der Befestigung der Sammelschienen in ihren Haltern können die Vorrichtungen abgenommen und erneut benutzen werden.

Die Erfindung wird im folgenden anhand der in den Figuren dargestellten Ausführungsbeispiele näher erläutert.

Die Figur 1 zeigt schematisch in perspektivischer Darstellung die Hauptbestandtteile des Gerüstes einer Niederspannungs-Schaltanlage mit obenliegendem Sammelschienenraum.

In der Figur 2 sind in einer der Figur 1 entsprechenden Darstellung die Hauptbestandtteile eine Niederspannungs-Schaltanlage mit rückseitig angeordnetem Sammelschienenraum gezeigt.

Die Figur 3 zeigt einen obenliegenden Sammelschienenhalter.

In der Figur 4 ist eine Schaltanlage schematisch mit Blick auf einen rückseitig angeordneten Sammelschienenraum.

Die Figur 5 zeigt eine Montagevorrichtung zum Einsetzen von Sammelschienen in Sammelschienenträger gemäß der Figur 4.

In der Figur 6 ist ein Sammelschienenträger mit schräg angeordneten Ausnehmungen für Sammelschienen gezeigt.

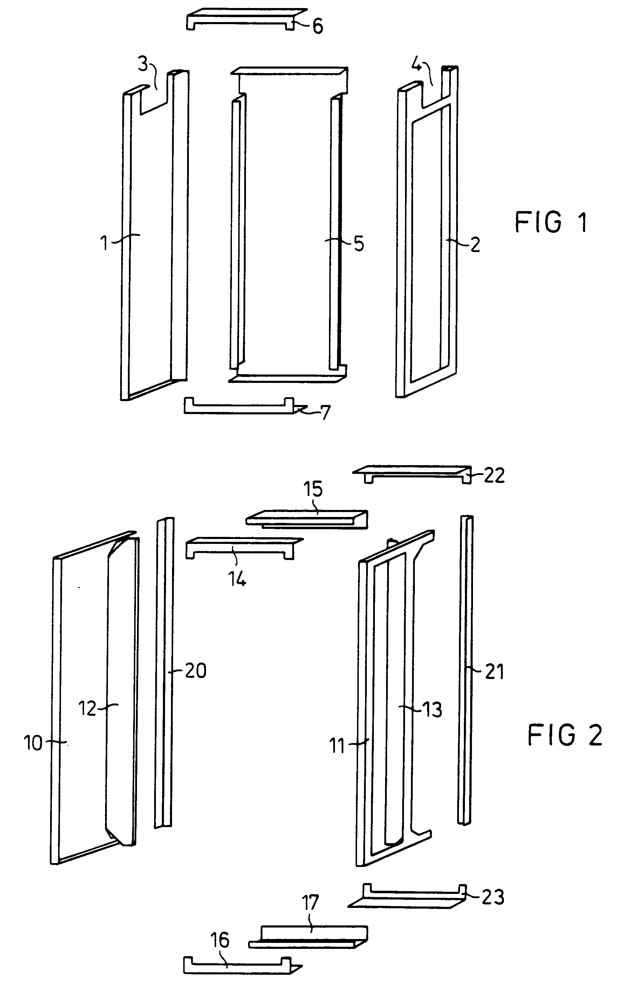

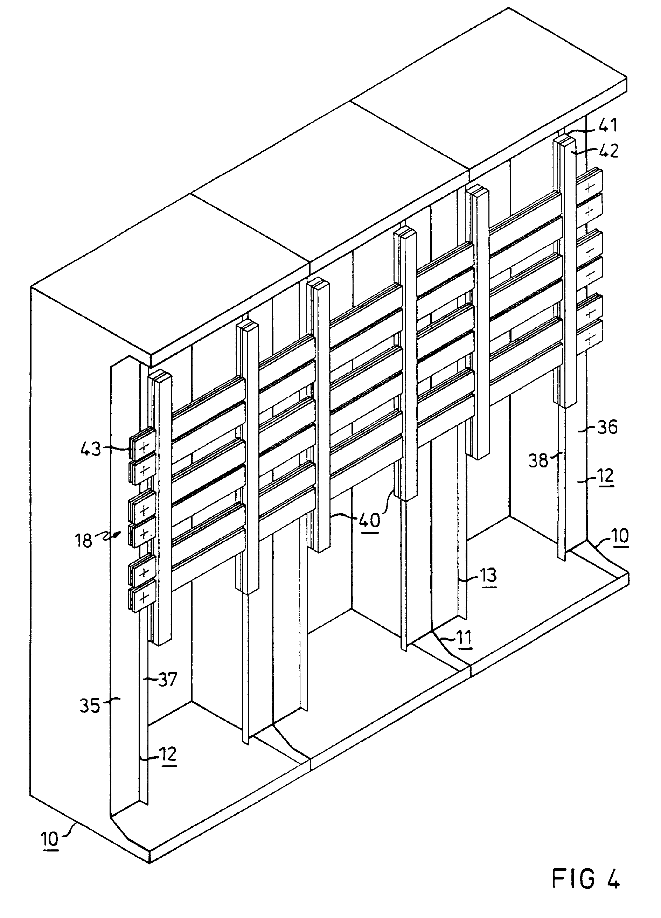

In der Figur 1 sind die wesentlichen Teile eines Feldes einer Niederspannungs-Schaltanlage auseinander gezogen perspektivisch dargestellt. Eine linke Seitenwand 1 und eine rechte Seitenwand 2 weisen an ihrem oberen Ende jeweils eine Profileinziehung 3 bzw. 4 auf, die einen nach oben offenen Sammelschienenraum begrenzt. Eine Rückwand 5 sowie ein oberer Querholm 6 und ein unterer Querholm 7 vervollständigen die Gerüstanordnung. Dadurch, daß alle Seitenwände 1 und 2 mit Profileinziehungen 3 bzw. 4 versehen sind, entsteht bei einer mehrfeldrigen Anlage ein auf der ganzen Länge zugänglicher Sammelschienenraum. Dies ermöglicht das Einlegen durchgehende Sammelschienen ohne das bisherige Durchschiebeverfahren. Die Sammelschienen gelangen auf diese Weise gleichzeitig in Eingriff mit den Ausnehmungen aller vorgesehener Sammelschienenträger.

Eine Schaltanlage mit Teilen gemäß der Figur 2 ist besonders für den Fall geeignet, daß ein größerer Sammelschienenraum benötigt wird, um einen höheren Nennstrom zu beherrschen. Wie die Figur 2 zeigt, sind Seitenwände 10 und 11 mit einer rückwärtigen Profileinziehung 12 bzw. 13 versehen, die sich über den überwiegenden Teil der Höhenabmessung der Seitenwände 10 und 11 erstrecken. Obere Querstücke 14, 15 sowie untere Querstücke 16, 17 bestimmen die Breite eines Feldes der Schaltanlage. Rückseitige vertikale Abschlußprofile 20 (links) bzw. 21 (rechts) und zugehörige Abschlußquerstücke 22 (oben) und 23 (unten) bilden Auflageflächen für eine Rückwand, die nach der Montage der Sammelschienenanordnung angebracht werden kann.

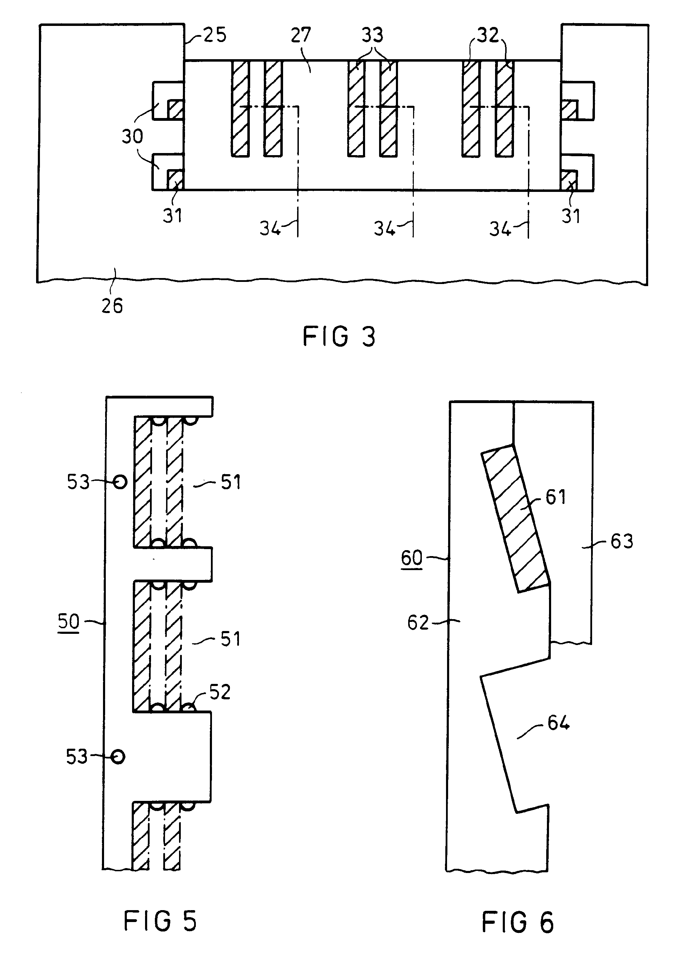

Die Figur 3 zeigt schematisch im Schnitt einen obenliegend angeordneten Sammelschienenraum einer Schaltanlage. Durch Aussparungen 25 in den aufeinanderfolgenden Seitenwänden 26 der benachbarten Felder wird eine Profileinziehung gebildet, in welcher ein durchgehender Sammelschienenzug für alle benachbarten Schaltfelder angeordnet werden kann. Es sind Sammelschienenträger 27 vorgesehen, die mit hakenartigen seitlichen Fortsätzen 30 über Halteorgane 31 greifen. In Ausnehmungen 32 der Sammelschienenträger 27 sind Sammelschienen 33 eingelegt. Die Tiefe der Ausnehmungen 32 entspricht dabei der Höhe des Rechteckprofils der Sammelschienenleiter. Je zwei Sammelschienenleiter 33 sind einer Phase zugeordnet. Eine obere Abdeckung oder Befestigung der Sammelschienenleiter ist nicht erforderlich, weil durch die Verbindung der Sammelschienenleiter 33 mit weiterführenden und mehrfach befestigten Stromschienen eine ausreichend starre Befestigung gewährleistet ist. Solche weiterführenden Stromschienen 34 sind in der Figur 3 gestrichelt angedeutet.

Die Figur 4 zeigt eine aus drei nebeneinander aufgestellten Feldern bestehende Schaltanlage mit Blick auf einen rückseitig vorgesehenen Sammelschienenraum 18. Die Felder bestehen aus der Figur 2 entsprechenden Teilen, deren Bezugszeichen auch in der Figur 4 eingetragen sind. Wie man erkennt, weisen die Felder rückseitig eine Profileinziehung auf, welche durch die Gestalt der Seitenwände 10 und 11 bewirkt ist. Die Profileinziehungen 12 bzw. 13 der Seitenwände 10 und 11 sind durch abgekantete Schenkel 35 bzw. 36 gebildet, deren Enden nochmals, und zwar in Richtung zur Rückseite der Schaltanlage, mit einem abgekanteten Schenkel 37 bzw. 38 versehen sind. Die Schenkel 35 und 37 bzw. 36 und 38 dienen zur Anbringung von Sammelschienenhaltern 40, die aus einem Unterteil 41 und einem spiegelbildlichen Oberteil 42 bestehen. Je Feld sind zwei Sammelschienenhalter 40 vorgesehen.

Wie bereits erwähnt, eignet sich ein rückseitig an den Schaltfeldern vorgesehener Sammelschienenraum insbesondere für Sammelschienenzüge mit großem Querschnitt. In dem in der Figur 4 gezeigten Beispiel sind je Phase vier Sammelschienen 43 angeordnet, und zwar jeweils zwei Schienen 43 parallel und zwei solcher paralleler Paare übereinander. Die Oberteile 41 und die Unterteile 42 der Sammelschienenhalter 40 erstrecken sich über die gesamte Höhe der Sammelschienenanordnung.

Zur Montage der Sammelschienen 43 ist eine Montagevorrichtung 50 gemäß der Figur 5 vorgesehen. Diese ist gabelartig gestaltet und weist Ausnehmungen 51 zur Aufnahme der Sammelschienen 43 auf. Zu vorübergehenden Halterung der Sammelschienen 43 ist die Montagevorrichtung 50 mit geeigneten Rastvorrichtungen, beispielsweise mit Elementen 52 ähnlich Kugelschnappern versehen. In der Figur 5 ist die Montagevorrichtung 50 abgebrochen dargestellt. Gezeigt sind zwei Ausnehmungen 51 für je zwei Sammelschienen, d. h. für die insgesamt vier Sammelschienen 43, die in der Anordnung gemäß der Figur 4 eine Phase bilden. Löcher 53 gestalten die Befestigung der Montagevorrichtung 50.

Zur Montage der Sammelschienen werden zunächst Montagevorrichtungen 50 in einer geeigneten Anzahl an den Seitenwänden 10 und 11 (Figur 4) befestigt, z. B. mittels der in den Montagevorrichtungen 50 vorgesehenen Löcher 53. Dann werden die Sammelschienen in die Ausnehmungen 51 eingelegt, wobei die Sammelschienen in eine fluchtende Stellung zu entsprechenden Ausnehmungen der Unterteile 41 der Sammelschienenhalter 40 gelangen. Sobald alle Sammelschienen 43 eingelegt sind, können die Oberteile 42 aufgelegt und fest mit den Unterteilen 41 zur Bildung der kompletten Sammelschienenhalter 40 verbunden werden. Die Montagevorrichtungen 50 können nun abgenommen und erneut verwendet werden.

In der Figur 6 ist abgebrochen ein Sammelschienenträger 60 gezeigt, der gleichfalls zur Verwendung in Verbindung mit einem rückseitig angeordneten Sammelschienenraum vorgesehen ist. Der Sammelschienenträger 60 dient zur Aufnahme von Sammelschienen 61 und ist hierzu derart gestaltet, daß das Unterteil 62 und das Oberteil 63 zusammenpassend zusammenfügbar sind. In dem Unterteil 62 sind dem Profil der Sammelschienen 61 entsprechende Ausnehmungen 64 angeordnet, die derart rückwärts geneigt sind, daß beim Einlegen der Sammelschienen 61 in die Ausnehmungen 64 eine stabile Lage gegeben ist. Es bedarf daher keiner vorübergehenden Befestigung der Sammelschienen 61. Erst nachdem alle vorgesehenen Sammelschienen 61 in die zugehörigen Ausnehmungen 64 eingelegt sind, wird das Oberteil 63 aufgelegt und in geeigneter Weise mit dem Unterteil 62 verbunden. Im oberen Teil der Figur 6 ist eine Sammelschiene 61 zwischen dem Unterteil 62 und dem Oberteil 63 gezeigt. Im unteren Teil der Figur 6 ist das Oberteil 63 fortgelassen, so daß die Gestalt der Ausnehmung 64 des Unterteiles 62 besser erkennbar ist.

Vorstehend ist die Erfindung im Zusammenhang mit einer Sammelschienenanordnung erläutert, die jeweils mehrere Sammelschienen je Phase aufweist. Wie ohne weiteres aus der vorangehenden Beschreibung ersichtlich ist, eignet sich jedoch die neue Gestaltung einer Schaltanlage und die hierzu erläuterte Montagevorrichtung gleichermaßen für Einzelsammelschienen je Phase und auch für Anordnungen mit einer größeren Anzahl von Sammelschienen je Phase.

## Patentansprüche

1. Elektrische Schaltanlage mit mehreren zusammengesetzten Feldern und sich über mehrere Felder erstreckenden Sammelschienen (27), die innerhalb der Gesamtabmessungen der Schaltanlage verlaufend angeordnet und mittels isolierender Sammelschienenträger (25) gehalten sind, **dadurch gekennzeichnet,**
daß durch ein örtliche zurückgesetztes bzw. eingezogenes Profil (Profileinziehungen 3, 4; 12, 13) der tragenden Elemente (1, 2; 10, 11) benachbarter Felder ein auf ganzer Länge zugänglicher Sammelschienenraum (18) gebildet ist und daß die Sammelschienenträger (25; 40) kammartig mit Ausnehmungen (26) zur Aufnahme des vollen Profils der Sammelschienen (43) ausgebildet sind.

2. Schaltanlage nach Anspruch 1, **dadurch gekennzeichnet,** daß bei einem an der Rückseite der Schaltanlage angeordneten Sammelschienenraum (18) die Breite der Ausnehmungen der Sammelschienenträger (40) der größeren Abmessung des Profils der Sammelschienen (43) entsprechend bemessen und daß die unterschiedlichen Phasen zugeorneten Sammelschienen (43) übereinander angeordnet sind.

3. Schaltanlage nach Anspruch 1 oder 2, **dadurch gekennzeichnet,** daß die Sammelschienenträger (27) hinterschnittene Vorsprünge (30) aufweisen und daß Tragelemente (30) zum Eingreifen der Vorsprünge (30) der Sammelschienenträger (27) angeordnet sind.

4. Schaltanlage nach einem der vorangehenden Ansprüche, **dadurch gekennzeichnet,** daß bei rückseitiger Anordnung des Sammelschienenraumes (18) die Ausnehmungen (64) der Sammelschienenträger (60) winklig zur Rückwand der Schaltanlage vorgesehen sind.

5. Montagevorrichtung zur Montage von Sammelschienen an einer Schaltanlage mit rückseitig angeordnetem Sammelschienenraum nach Anspruch 2, **dadurch gekennzeichnet,** daß die Montagevorrichtung (50) wenigstens Ausnehmungen (51) entsprechend den Ausnehmungen der Sammelschienenträger (40) aufweist, und daß Klemm- oder Rastvorrichtungen (52) zur vorübergehenden Befestigung der Sammelschienen (43) in den Ausnehmungen (51) vorgesehen sind.

## Claims

1. Electrical switchgear having several combined sections and busbars (27) extending over several sections, which busbars are arranged so that they run within the over-all dimensions of the switchgear and are retained by means of insulating busbar carriers (25), characterised in that a busbar compartment (18) accessible over its entire length is formed by a locally set back and/or indented profile (profile recesses 3, 4; 12, 13) of the carrying elements (1, 2; 10, 11) of adjacent sections and in that the busbar carriers (25; 40) are formed in the manner of a comb with recesses (26) for receiving the entire profile of the busbars (43).

2. Switchgear according to claim 1, characterised in that, in the case of a busbar compartment (18) arranged on the rear side of the switchgear, the width of the recesses of the busbar carriers (40) is adjusted to correspond to the larger dimension of the profile of the busbars (43) and in that the busbars (43) assigned to different phases are arranged one above another.

3. Switchgear according to claim 1 or 2, characterised in that the busbar carriers (27) have undercut projections (30) and in that carrying elements (30) (sic) are arranged for engaging with the projections (30) of the busbar carriers (27).

4. Switchgear according to one of the preceding claims, characterised in that, in the case of an arrangement of the busbar compartment (18) on the rear side, the recesses (64) of the busbar carriers (60) are provided at an angle to the rear wall of the switchgear.

5. Mounting apparatus for mounting busbars on a switchgear having a busbar compartment arranged on the rear side according to claim 2, characterised in that the mounting apparatus (50) at least has recesses (51) corresponding to the recesses of the busbar carriers (40), and in that clamping or catching devices (52) are provided in the recesses (51) for the temporary attachment of the busbars (43).

## Revendications

1. Installation de coupure électrique, comportant plusieurs panneaux assemblés et des barres omnibus (27) qui s'étendent sur plusieurs panneaux en étant dans les dimensions hors-tout de l'installation de coupure et qui sont retenues au moyen de supports isolants (25), caractérisée par le fait
qu'un logement (18) des barres omnibus, qui est accessible sur toute sa longueur, est formé par un profilé en retrait ou en renfoncement localement (parties de profilé en retrait 3, 4; 12, 13) des éléments porteurs (1, 2; 10, 11) de panneaux voisins et que les supports (25; 40) des barres omnibus sont agencés sous forme de peignes comportant des évidements (26) de réception de tout le profil complet des barres omnibus (43).

2. Installation de coupure suivant la revendication 1, caractérisée par le fait que pour un logement (18) des barres omnibus, qui est sur la face arrière de l'installation de coupure, la largeur des évidements des supports (40) des barres omnibus est telle qu'elle correspond à la dimension la plus grande du profil des barres omnibus (43) et que les barres omnibus (43) associées à différentes phases sont superposées.

3. Installation de coupure suivant la revendication 1 ou 2, caractérisée par le fait que les supports (27) des barres omnibus comportent des parties saillantes en contre-dépouille et que des éléments porteurs (31) sont disposés de manière à venir en prise avec les parties saillantes (30) du support (27) des barres omnibus.

4. Installation de coupure suivant l'une des revendications précédentes, caractérisée par le fait que dans le cas où le logement (18) des barres omnibus est sur la face arrière, les évidements (64) des supports (60) des barres omnibus font un angle avec la paroi arrière de l'installation de coupure.

5. Dispositif de montage de barres omnibus dans une installation de coupure comportant un logement des barres omnibus, prévu sur la face arrière, suivant la revendication 2, caractérisé par le fait que le dispositif de montage (50) comporte au moins des évidements (51) qui correspondent aux évidements des supports (40) des barres omnibus, et qu'il est prévu des dispositifs de blocage ou d'encliquetage (52) destinés à fixer de façon transitoire les barres omnibus (43) dans les évidements (51).
